# EUROPÄISCHE PATENTSCHRIFT

(11) **EP 1 325 805 B1**
(45) Veröffentlichungstag und Bekanntmachung des Hinweises auf die Patenterteilung: **18.03.2009**
(21) Anmeldenummer: 02028978.1
(22) Anmeldetag: 27.12.2002
(51) Int. Cl.: B29C 47/10, B29B 15/14, B65H 57/28, B65H 57/16

(54) **Faserstrangzuführ- und Faserstrangvorwärmvorrichtung bei der Herstellung von faserverstärkten Kunststoffmassen und Verfahren hierzu**
Fibre strands feeding and preheating apparatus for the production of fibre reinforced plastic materials and corresponding method
Dispositif d'alimentation et de préchauffage de torons de fibres pour la fabrication de matériaux plastiques renforcés par des fibres et procédé correspondant

(30) Priorität: 25.12.2001 DE 10163521
(43) Veröffentlichungstag der Anmeldung: 09.07.2003
(73) Patentinhaber: Dieffenbacher GmbH + Co. KG, 75031 Eppingen (DE)
(72) Erfinder: Brüssel, Richard, 75056 Sulzfeld (DE)
(74) Vertreter: Hartdegen, Anton

(56) Entgegenhaltungen:
- EP-A- 0 330 980
- DE-A- 3 835 574
- US-A- 4 056 240
- US-A- 4 720 366

## Beschreibung

Die Erfindung betrifft eine Faserstrangzuführ- und Faserstrangvorwärmvorrichtung bei der Herstellung von faserverstärkten Kunststoffmassen gemäss Patentanspruch 1 und ein Verfahren nach Patentanspruch 7.

Durch die DE 198 36 787 A1, von der die Erfindung ausgeht, ist ein Verfahren und ein Plastifizierextruder bekannt geworden, nach der ein endloser Faserstrang vor dem Einführen in die Zuführöffnung des Plastifizierextruders über ein Führungsgatter geführt und mittels einer Strahlungsheizeinrichtung vorgewärmt wird. Die dabei aufgezeigte Faserstrangzuführ- und Faserstrangvorwärmvorrichtung ist noch verbesserungsfähig.

Bekannt ist weiter, dass die endlosen Faserstränge, sogenannte Rovings, welche aus vielen einzelnen Fasern, sogenannten Filamenten bestehen, für die Verarbeitung zum Beispiel bei der Herstellung von Stäbchengranulaten oder beim LFT-Direktverfahren vorgewärmt werden.

Dabei wird mit Kontaktwärme und/oder Strahlungswärme gearbeitet. Es ist auch ein System bekannt, wo die einzelnen Faserstränge durch relativ lange Rohrleitungen indirekt beheizt werden. Das hat zwar den Vorteil, dass mit geringer Übertemperatur die Faserstränge auf Verarbeitungstemperatur aufgeheizt werden können. Dies bedeutet aber einen sehr grossen Aufwand mit relativ viel Platzbedarf und Einschränkungen in der Anordnung.

Bei der Verwendung von Strahlungsenergie werden die Schlichten auf den Faseroberflächen durch die relativ grosse Übertemperatur mehr oder weniger thermisch zersetzt, was dann die Faser-Matrix-Kopplung negativ beeinflusst.

Weiter ist bekannt, s. DE 3835574, dass die Erwärmung der Faserstränge dadurch verbessert werden kann, wenn diese über eine Umlenkung gezogen und dadurch geöffnet und breitgelegt werden. Die dabei verwendeten festen Führungsgatter können jedoch nicht verhindern, dass die Faserstränge sich einseitig an dem Gatter orientieren und sich mehr oder weniger wieder zu einem kompakten Strang zusammenziehen. Wenn ohne Führungsgatter gearbeitet wird, kommt es häufig vor, dass sich mehrere Faserstränge zu einem kompakten Faserstrang verbinden. Dies führt zu deutlichen Prozessstörungen.

Der Erfindung liegt die Aufgabe zugrunde ein Verfahren und eine Faserstrangzuführ- und Faserstrangvorwärmvorrichtung zu schaffen, mit der auch Faserbandbreiten bis zu 600 mm genau geführt und vorgewärmt werden können, mit der während dem Betrieb bei laufenden Fasersträngen ein Umgriff zum Einfädeln möglich ist und bei der bei Stillstand der Anlage keine Überhitzung der Fasern eintritt sowie mit der ein effizienter Wärmeübergang auf die Fasern gewährleistet ist.

Die Lösung dieser Aufgabe besteht für das Verfahren darin, dass mehrere endlose Faserstränge mäanderförmig über mehrere Hauptheizstäbe mit dazwischen mäanderförmig angeordneten Zwischenheizstäben und jeweils zwischen den Haupt- und Zwischenheizstäben quer zur Faserlaufrichtung sowie oszillierend angeordneten Führungsgattem geführt sind.

Die erfindungsgemässe Vorrichtung und das Verfahren ermöglicht in vorteilhafterweise,
- dass die Zwischenheizstäbe quer zu ihrer Längsachse zwischen den Hauptheizstäben und den Führungsgattern verschoben werden können und die Führungsschlitze in den Führungsgattern derart gestaltet sind, dass die Faserstränge während der Heizstabverschiebung gestreckt zwischen den Umlenkflächen der Heizstäbe durchgezogen werden können und sich die Führungsgatter oszillierend quer zur Faserlaufrichtung bewegen,
- dass die Zwischenheizstäbe einzeln manuell oder automatisch verschoben werden können,
- die Führungsbleche der Führungsgatter derart geformt sind, dass damit ein Nummernsystem für die Spurnummer des einzelnen Faserstränge entsteht,
- dass die Schlitze im Führungsgatter so lang sind, dass die Führungsgatter bei der Verschiebung der Zwischenheizstäbe nicht mitverschoben werden müssen und
- dass die Führungsgatter mit Führungsblechen und Distanzscheiben gebildet werden, wobei durch einen Austausch der Distanzscheiben die Schlitzbreite angepasst werden kann.

Weiter ist bei der Umschlingung der Faserstränge in Mäanderform um die Heizstäbe gewährleistet, dass die einzelnen Faserstränge möglichst von einer Bedienungsperson bei aufgeheizten Heizstäben einfädelbar sind und dies möglichst bei laufenden Fasersträngen.
Dadurch, dass es sich um relativ kurze Wärmeeinwirkungszeiten handelt, wird die Faserstrangvorwärmung in einem isolierten Gehäuse vorgenommen, damit die sich negativ auswirkende Konvektion bzw. ein Kamineffekt durch die kalte Umgebungsluft minimiert wird. Da bei kurzer Wärmeeinwirkungszeit der Wärmeeinfluss meist bei einer Übertemperatur erfolgen muss, um eine ausreichende Vorwärmtemperatur zu erreichen, ist es erforderlich, dass bei Anlagenstillstand der Faserstrangkontakt zu den Heizstäben gelöst wird, damit keine Überhitzung mit Materialschädigung erfolgt.

Von Vorteil ist auch, dass die oszillierende Querbewegung jeden einzelnen Faserstrang bei geringster Zugkraft auch ausserhalb des Führungsgatters in seiner Spur hält, weshalb diese fast dicht an dicht nebeneinander laufen ohne dass sie sich miteinander verbinden oder verhaken. Durch das mänderförmige Umschlingen der Faserstränge um die Heizstäbe werden'die Faserstränge geöffnet und breitgelegt und durch die oszillierende Querbewegung der Führungsgatter wird ein zusätzliches Umschichten der Einzelfasern erreicht, weshalb ein hocheffizienter Wärmeübergang stattfindet.

Beim Verschieben der Zwischenheizstäbe von der Heizposition zur Einfädelposition verlassen die Faserstränge die mäanderförmige Umschlingung der Heizstäbe, womit der Faserstrang bei Stillstand der Anlage vor Überhitzung geschützt ist. In dieser Position können auch von einer Seite aus die Faserstränge problemlos eingefädelt werden. Die bevorzugte Ausführung des oszillierenden Führungsgatters ist, dass die Schlitze so lang sind, dass das Gatter nicht der Verschiebebewegung der Heizstäbe folgen muss. Wenn die Zwischenstäbe einzeln nacheinander von ihrer Heizposition in die Einfädelposition bewegt werden, können die Faserstränge - bei reduzierter Vorwärmeleistung - fliegend eingefädelt werden.

Weitere vorteilhafte Massnahmen und Ausgestaltungen des Gegenstandes der Erfindung gehen aus den Unteransprüchen und der folgenden Beschreibung mit der Zeichnung hervor.

Es zeigen:
- Figur 1: in schematischer Darstellung die Faserstrangzuführ- und Faserstrangvorwärmvorrichtung gemäss der Erfindung in Seitenansicht und

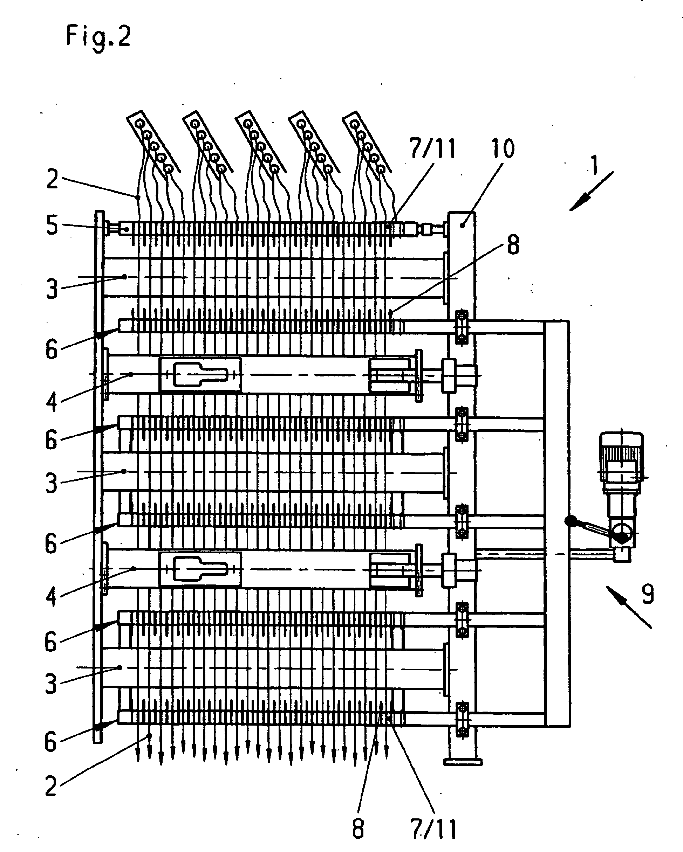

- Figur 2: die Faserstrangzuführ- und Faserstrangvorwärmvorrichtung nach Figur 1 in Vorderansicht.

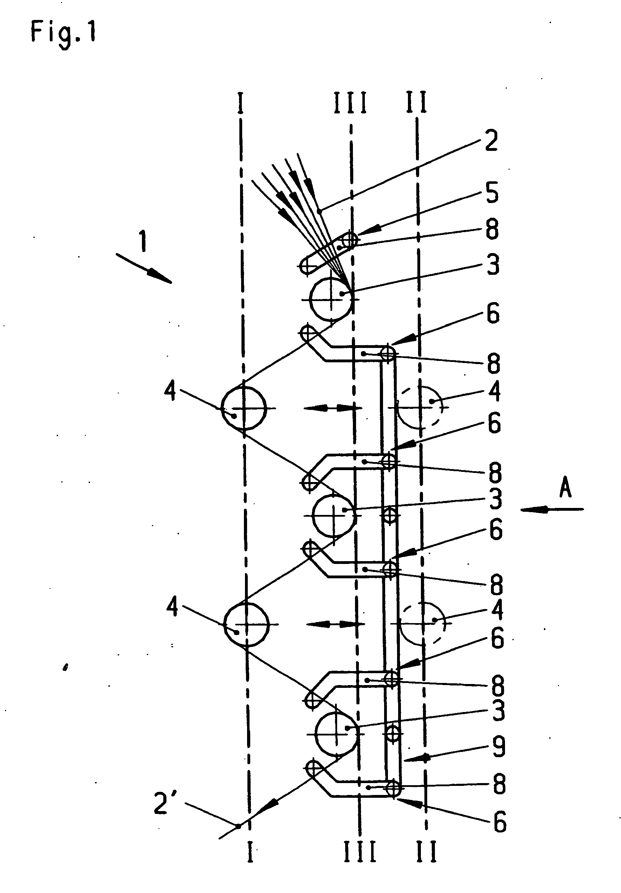

Die in Figur 1 dargestellte Faserstrangzuführ- und Faserstrangvorwärmvorrichtung 1 in Seitenansicht zeigt die von Rollen/Trommeln kommenden endlosen Faserstränge 2, wie sie mittels dem festen Führungsgatter 5 über einen ersten feststehenden Hauptheizstab 3 geführt sind. Nach der Erfindung werden die Faserstränge 2 mäanderförmig über in einem Maschinenständer 10 fixierte mehrere Hauptheizstäbe 3 mit dazwischen mäanderförmig angeordneten Zwischenheizstäben 4 quer zur Faserlaufrichtung in oszillierend und verschiebbar angeordneten Führungsgattern 6 zum Plastifizierextruder (nicht dargestellt) geführt. Um ein freies Einfädeln der Faserstränge 2 in der Faserstrang-Durchhängachse III-III zu ermöglichen, sind die Zwischenheizstäbe 4 quer zu ihrer Längsachse aus der Heizposition I-I in eine Einfädelposition II-II mittels motorisch antreibbaren Distanzschieber 9 verschiebbar angeordnet. Dafür können die Zwischenheizstäbe 4 einzeln oder gemeinsam manuell oder motorisch verschiebbar ausgebildet sein. Zum besseren Einfädeln und sicherer Führung der Faserstränge 2 sind dafür die Führungsgatter 5 und 6 mit Führungsschlitzen 7 und Führungsblechen 8 ausgestaltet. Für verschieden dicke Faserstränge 2 ist vorgesehen, die Führungsgatter 5 und 6 mit austauschbaren Distanzscheiben 11 auszuführen. Die Faserstrangzuführ- und Faserstrangvorwärmvorrichtung 1 ist zweckmässigerweise in einem isolierten Gehäuse (nicht dargestellt) untergebracht.

### Bezugszeichenliste:

- 1.: Faserstrangzuführ- und Faserstrangvorwärmvorrichtung
- 2.: Faserstrang
- 3.: Hauptheizstab
- 4.: Zwischenheizstab
- 5.: festes Führungsgatter
- 6.: verschiebbares Führungsgatter
- 7.: Führungsschlitze in den Führungsgattern 5 und 6
- 8.: Führungsblech in den Führungsgattern 5 und 6
- 9.: Distanzschieber
- 10.: Maschinenständer
- 11.: Distanzscheiben

- I-I: Heizposition
- II-II: Einfädelposition
- III-III: Faserstrang-Durchhängachse

## Patentansprüche

1. Faserstrangzuführ- und Faserstrangvorwärmvorrichtung (1) bei der Herstellung von faserverstärkten Kunststoffmassen unter Verwendung eines Plastifizierextruders bei der ein Faserstrang (2) über ein Führungsgatter und eine Vorwärmeinrichtung in die Zuführöffnung eines Plastifizierextruders geführt ist,
wobei
eine mäanderförmige Anordnung mehrerer Hauptheizstäbe (3) mit dazwischen angeordneten Zwischenheizstäben (4) zur Führung mehrerer endloser Faserstränge (2) vorgesehen ist und
wobei
jeweils zwischen den Haupt- und Zwischenheizstäben (3 und 4) quer zur Faserlaufrichtung oszillierende Führungsgatter (6) angeordnet sind.

2. Faserstrangzuführ- und Faserstrangvorwärmvorrichtung nach Anspruch 1, **dadurch gekennzeichnet, dass** die Zwischenheizstäbe (4) quer zu ihrer Längsachse aus der Heizposition (I-I) in eine Einfädelposition (II-II) einzeln oder gemeinsam, automatisch oder manuell verschiebbar angeordnet sind.

3. Faserstrangzuführ- und Faserstrangvorwärmvorrichtung nach den Ansprüche 1 und 2, **dadurch gekennzeichnet, dass** die verschiebbaren Führungsgatter (6) mit Führungsschlitzen (7) über die senkrechte Faserstrang-Durchhängachse (III-III) in Richtung Einfädelposition (II-II) der Zwischenheizstäbe (4) hinausgehend ausgestattet sind.

4. Faserstrangzuführ- und Faserstrangvorwärmvorrichtung nach einem oder mehreren der Ansprüche 1 bis 3, **dadurch gekennzeichnet, dass** die Führungsgatter (5 und 6) mit Führungsblechen (8) und mit austauschbaren Distanzscheiben (11) ausgestattet sind.

5. Faserstrangzuführ- und Faserstrangvorwärmvorrichtung nach einem oder mehreren der Ansprüche 1 bis 4, **dadurch gekennzeichnet, dass** vor dem ersten Hauptheizstab (3) ein fest installiertes Führungsgatter (5) angeordnet ist.

6. Faserstrangzuführ- und Fäserstrangvorwärmvorrichtung nach einem oder mehreren der Ansprüche 1 bis 5, **dadurch gekennzeichnet, dass** die Faserstrangzuführ- und Faserstrangvorwärmvorrichtung (1) in einem isolierten Gehäuse eingebaut ist.

7. Verfahren zur Herstellung von faserverstärkten Kunststoffmassen unter Verwendung eines Plastifizierextruders bei der ein Faserstrang (2) über ein Führungsgatter und eine Vorwärmeinrichtung in die Zuführöffnung eines Plastifizierextruders geführt ist, wobei in einer Faserstrangzuführ- und Faserstrangvorwärmvorrichtung (1) mehrere endlose Faserstränge (2) mäanderförmig über mehrere Hauptheizstäbe (3) mit dazwischen mäanderförmig angeordneten Zwischenheizstäben (4) und jeweils zwischen den Haupt- und Zwischenheizstäben (3 und 4) quer zur Faserlaufrichtung sowie oszillierend angeordneten Führungsgattem (6) geführt sind.

## Claims

1. A fiber rovings feed and preheating apparatus (1) in the production of fiber-reinforced plastic compounds by using a plastifying extruder in which rovings (2) are guided via a guide grid and a preheating device to the feed opening of a plastifying extruder, with a meandering arrangement of several primary heating bars (3) with interposed intermediate heating bars (4) are provided for guiding several endless rovings (2), and with guide grids (6) which oscillate transversally to the travelling direction of the fibers each being arranged between the primary and intermediate heating bars (3 and 4).

2. A fiber rovings feed and preheating apparatus according to claim 1, **characterized in that** the intermediate heating bars (4) are arranged to be displaceable either manually or automatically, individually or jointly, from the heating position (I-I) to a threading position (II-II) transversally to their longitudinal axis.

3. A fiber rovings feed and preheating apparatus according to the claims 1 and 2, **characterized in that** the displaceable guide grids (6) are provided with guide slots (7) above the perpendicular roving catenary axis (III-III) in the direction of the threading position (II-II) of the intermediate heating bars (4) and beyond the same.

4. A fiber rovings feed and preheating apparatus according to one or several of the claims 1 to 3, **characterized in that** the guide grids (5 and 6) are provided with guide plates (8) and exchangeable spacer disks (11).

5. A fiber rovings feed and preheating apparatus according to one or several of the claims 1 to 4, **characterized in that** a fixed guide grid (5) is arranged before the first main heating bar (3).

6. A fiber rovings feed and preheating apparatus according to one or several of the claims 1 to 5, **characterized in that** the fiber rovings feed and preheating apparatus (1) is built into an insulated housing.

7. A method for producing fiber-reinforced plastic compounds by using a plastifying extruder in which a roving (2) is guided via a guide grid and a preheating device to the feed opening of a plastifying extruder, with several endless rovings (2) being guided in a meandering manner in a fiber rovings feed and preheating apparatus (1) over several heating bars (3) with intermediate heating bars (4) arranged in between in a meandering manner and guide grids (6) which are arranged in an oscillating manner and between the main and intermediate heating bars (3 and 4) transversally to the direction of travel of the fibers.

## Revendications

1. Dispositif d'arrivée et de préchauffage de faisceaux de fibres (1) dans la fabrication de matières plastiques armées de fibres utilisant une extrudeuse de plastification, dans laquelle un faisceau de fibres (2) est introduit à travers une grille de guidage et un dispositif de préchauffage dans l'ouverture d'alimentation d'une extrudeuse de plastification, dans lequel une disposition sinueuse de plusieurs barres chauffantes principales (3) avec des barres de chauffage intermédiaires (4) disposées entre elles est prévue pour le guidage de plusieurs faisceaux de fibres (2) sans fin, et dans lequel des grilles de guidage (6) oscillant perpendiculairement au sens de passage des fils sont prévues entre les barres chauffantes principales et intermédiaires (3 et 4).

2. Dispositif d'arrivée et de préchauffage de faisceaux de fibres selon la revendication 1, **caractérisé en ce que** les barres chauffantes intermédiaires (4) sont disposées de façon à pouvoir être déplacées perpendiculairement à leur axe longitudinal de la position de chauffage (I-I) à une position de passage (II-II), séparément ou ensemble, automatiquement ou manuellement.

3. Dispositif d'arrivée et de préchauffage de faisceaux de fibres selon les revendications 1 et 2, **caractérisé en ce que** les grilles de guidage coulissantes (6) sont munies de fentes de guidage (7) au-delà de l'axe vertical de bouclage des faisceaux de fibres (III-III) en direction de la position de passage (II-II) des barres chauffantes intermédiaires (4).

4. Dispositif d'arrivée et de préchauffage de faisceaux de fibres selon une ou plusieurs des revendications 1 à 3, **caractérisé en ce que** les grilles de guidage (5 et 6) sont équipées de tôles de guidage (8) et de plaques d'écartement (11) interchangeables.

5. Dispositif d'arrivée et de préchauffage de faisceaux de fibres selon une ou plusieurs des revendications 1 à 5, **caractérisé en ce qu'**une grille de guidage (5) fixe est disposée avant la première barre chauffante (3).

6. Dispositif d'arrivée et de préchauffage de faisceaux de fibres selon une ou plusieurs des revendications 1 à 5, **caractérisé en ce que** le dispositif d'arrivée et de préchauffage de faisceaux de fibres (1) est installé dans un boîtier isolé.

7. Procédé pour la fabrication de matières plastiques armées de fibres utilisant une extrudeuse de plastification, dans laquelle un faisceau de fibres (2) est introduite à travers une grille de guidage et un dispositif de préchauffage dans l'ouverture d'alimentation d'une extrudeuse de plastification, dans lequel plusieurs faisceaux de fibres (2) sans fin sont guidés dans un dispositif d'arrivée et de préchauffage de faisceaux de fibres en méandres sur plusieurs barres chauffantes principales (3) entre lesquelles sont disposées des barres chauffantes intermédiaires (4) en méandres et avec des grilles de guidage (6) disposées entre les barres chauffantes principales et intermédiaires (3 et 4) perpendiculairement au sens de passage des fibres.
